# EUROPEAN PATENT SPECIFICATION

(11) **EP 3 792 581 B1**
(45) Date of publication and mention of the grant of the patent: **22.02.2023**
(21) Application number: 19197274.4
(22) Date of filing: 13.09.2019
(51) Int. Cl.: F28D 9/00, F28D 21/00, F28F 3/04, C02F 1/20, B01D 1/22, B01D 5/00, C02F 1/04, C02F 103/08

(54) **PLATE HEAT EXCHANGER FOR TREATMENT OF A LIQUID FEED**
PLATTENWÄRMETAUSCHER ZUR BEHANDLUNG EINER FLÜSSIGKEITSZUFUHR
ÉCHANGEUR DE CHALEUR À PLAQUES POUR LE TRAITEMENT D'UNE ALIMENTATION DE LIQUIDE

(43) Date of publication of application: 17.03.2021
(73) Proprietor: Alfa Laval Corporate AB, 221 00 Lund (SE)
(72) Inventor: BLOMGREN, Fredrik, SE-239 41 FALSTERBO (SE)
(74) Representative: Alfa Laval Attorneys

(56) References cited:
- WO-A1-01/00533
- WO-A1-2006/104443
- DE-A1- 3 721 132
- US-A- 5 226 474
- US-A- 5 587 053
- US-A1- 2017 348 608

## Description

The present invention relates to a plate heat exchanger for treatment of a liquid feed, a heat exchanging plate for a plate heat exchanger for treatment of a liquid feed, and a method of producing a plate heat exchanger for treatment of a liquid feed.

### Background of the invention

Equipment for desalination of seawater, where one or several plate packages of heat exchanger plates form the main components in the process, has been manufactured since many years. SE 464 938 B discloses such a desalination plant comprising a plate package provided in a cylindrical container. The heat exchanger plates have no ports for steam, but instead the space outside the heat exchanger plates is used as one or several flow paths for the steam, depending on the kind of process. The container is a substantially cylindrical pressure vessel. In a large plant including several plate packages, these may be placed in the longitudinal direction of the cylinder. To a certain extent, the container is limiting for the size of the plant, if not several containers can be included in the plant.

The applicant company has since several years produced a fresh water generator without any tank where the evaporation, separation and condensation take place in the plate package. The details may be found in the international application WO 2006 / 104443 A1 assigned to Alfa Laval Corporate AB. It is disclosing a plate heat exchanger for desalination. The heat exchanger has first- and second plate interspaces formed in alternating order in the heat exchanger. The first plate interspace forms an evaporation section, a separation section and a condensation section, whereas the second plate interspace form heating and cooling sections. The evaporation section is used for evaporating a liquid feed, typically sea water, the separation section is used for separating evaporated feed from non-evaporated feed and the condensation section is used for condensing the evaporated feed. The heating section is heating the evaporation section and the cooling section is cooling the condensation section. The separation section extends between both plate interspaces, i.e. also between the heating and cooling sections in the second plate interspace. The advantage of the above-mentioned heat exchanger is that it does not need any container since the whole treatment of the seawater is performed in the plate package.

When the vaporized feed flows from the evaporation section to the separation section it is necessary to ensure that the vaporized feed is distributed over the complete evaporation section in order to utilize the complete surface of the separation section. As the inlets to the condensation section typically is located adjacent the longitudinal edges of the plate, the flow will mostly remain adjacent the longitudinal edges and the central region of the separator may be unused. This may lead to the non-vaporized feed being insufficiently separated from the vaporized feed when reaching the condensation section. As the non-vaporized feed constitutes a concentrated feed, i.e. a brine, even a small amount of non-vaporized feed into the vaporized feed will reduce the quality of the condensed feed from the condensation section.

Likewise, it is important to ensure that the droplets of non-vaporized feed, i.e. brine, which has been separated from the vaporized feed, are led into a brine section separate from the evaporation section. Otherwise the non-vaporized feed returning to the evaporator will increase the concentration (salinity) of the feed in the evaporation section. The droplets will flow back towards the evaporation section due to gravity, should be funnelled into the brine section which is typically arranged next to the evaporation section.

It has been tested to use a rubber barrier for directing the vaporized feed towards the central axis and/or for directing the non-vaporized feed towards the respective brine section, however, the rubber gasket solution has some drawbacks and is not optimal when it comes to gasket handling and assembly and is generally a sensitive part of the gaskets.

It is therefore an object of the present invention to provide technologies for avoiding the use of rubber gaskets for directing the vaporized feed towards the central axis and/or for directing the non-vaporized feed towards the respective brine section.

Further prior art includes CN203820488UU disclosing a heat exchange plate which is sequentially divided from top to bottom into a condensation zone, an evaporation zone and a heating zone.

CN206262115UU describes an evaporating-separating-condensing three-in-sea water collecting plate. The gas-liquid separation zone separation structure using a flap. The flap is provided with reinforcing ribs.

GB1211065A describes a plate heat exchanger in which two plates are assembled in superimposed relation. One of the plates being turned 180° in its own plane relative to the other, and a passage is obtained between the plates.

KR101345733B1 describes a heat exchanger plate with barriers.

US8646517B2 describes a heat exchanger plate heat exchanger plate for a plate heat exchanger, which plate has a number of ports, a distribution region, a heat transfer region, a first adiabatic region, a second adiabatic region and an edge area that extends outside the ports and the regions.

### Summary of the invention

The above objects are realised in a first aspect not within the scope of the invention by a heat exchanger plate for a plate heat exchanger for treatment of a liquid feed, the heat exchanger plate defines a front surface and an opposite rear surface, a first longitudinal edge extending in a longitudinal direction and an opposite second longitudinal edge extending parallel to the first longitudinal edge and a centre axis extending substantially centrally between and in parallel with the first longitudinal edge and the second longitudinal edge, the heat exchanger plate further defining an evaporation section on the front surface for vaporizing the liquid feed, a separation section on the front surface for separating vaporized feed and non-vaporized feed, a first and a second brine section on the front surface for receiving the non-vaporized feed and a condensation section for condensing the vaporized feed, the separation sections being located between the evaporation section and the condensation section in the longitudinal direction, the first brine section being located between the evaporation section and the first longitudinal edge and the second brine section being located between the evaporation section and the second longitudinal edge, characterized in that each plate comprising a pair of front surface flow guiding elements for directing the vaporized feed towards the central axis and/or for directing the non-vaporized feed towards the respective brine section, each front surface flow guiding element defining an elongated ridge in the plate on the front surface between the evaporation section, the separation section and the respective brine section and extending in an oblique angle relative to the longitudinal direction.

The heat exchanger is typically formed as a plate package by arranging at least two but typically significantly more than two of the heat exchanging plates face to face whereby every second plate is turned 180 degrees forming alternating plate interfaces. Thus, front surfaces facing each other and rear surfaces facing each other in the plate package. The opposing front surfaces will form first plate interspaces and consequently opposing rear surfaces will form second plate interspaces. Gaskets are provided between the heat exchanging plates and normally two different types of gaskets are used alternatingly, forming the first and second type plate interspaces. The heat exchange is established between the fluids in the first plate interspace and the fluids in the second plate interspace.

The liquid feed, which typically is sea water, is introduced into the heat exchanger at the evaporation section. The evaporation of the liquid feed occurs in the heat exchanger at the evaporation section in the first plate interspaces. In the second plate interspaces, a heating section is formed opposite the evaporation section for circulating a heating fluid for heating and evaporating the feed at the evaporation section in the first plate interspace.

The longitudinal direction will form a vertical direction when the heat exchanger is in operation. The vaporized feed in the evaporation section in first plate interspaces flows upwards to the separation section in which the vaporized feed is separated from the non-vaporized feed which is mixed with the vaporized feed from the evaporation section. The vaporized feed continues to the condensation section in which the vaporized feed is condensed to a condensate which is removed from the heat exchanger. The condensate is in the present case fresh water. The condensation section may be placed in the same plate interspace (on the front plate surface) as the evaporation section, or alternatively in the opposite plate interspace (on the rear plate surface).

The non-vaporized feed constitutes droplets of liquid feed, e.g. brine, which follow the flow of vaporized feed. The non-vaporized feed is separated from the vaporized feed in the separation section and drops back towards the evaporation section by gravity. A brine section is located between each of the longitudinal edges of the plates and the evaporation section for receiving the non-vaporized feed. In the plate interspaces, the brine section forms passages for transporting the non-vaporized feed to an outlet. On the plate, the brine section may form a halfplane in between the ridges and valleys such that opposing plates do not contact but form a passage. The brine section is separated from the evaporation section by a gasket in a gasket groove.

The front surface flow guiding elements constitutes ridges in the front surface of the plate. In the first plate interspace, the opposing ridges of the front surface flow guiding elements of opposing plates contact each other along an elongated contact surface. Each of the front surface flow guiding elements is located between the evaporation section, the separation section and one of the respective brine sections. The front surface flow guiding elements further extend in an oblique angle for directing the vaporized feed originating from the evaporation section in a direction towards the centre of the separation section. The front surface flow guiding elements also directing the non-vaporized feed flowing downwards from the separation section towards the respective brine section adjacent the respective longitudinal edge.

Each of the front surface flow guiding elements thus extends from the brine section adjacent a respective edge of the plate in an oblique angle upwards towards the separation section and inwardly towards the centre axis. In this way the upwardly oriented flow of vaporized feed (and non-vaporized feed mixed with the vaporized feed) will be forced inwardly towards the centre of the separation section. This will allow the central part of the separation section to be better utilized. Also, the returning droplets of non-vaporized feed will be funnelled towards the brine section, avoiding that the brine droplets return to the evaporation section.

The length of each of the front surface flow guiding elements is small relative to the width of the plate such that most of the plate width remain open and no constriction appears between the front surface flow guiding elements.

The above technology using opposing contacting ridges in the plate as a barrier for guiding the flow thus avoids the used of rubber gaskets and may be used both for single stage and multi stage heat exchangers. The front surface flow guiding elements may be straight or slightly curved.

According to a further embodiment of the first aspect, the heat exchanger plate defines a further separation section on the rear surface of the plate opposite the separation section on the front surface and one or more elongated apertures located between the evaporation section and the separation section for allowing vaporized feed to flow through the plate.

Typically, both the first plate interspace and the second plate interspace are used for the separation section. The separation section and the further separation section are located on opposite sides of the plate. This necessitates at least one aperture through the plate between the evaporation section and the separation section for transporting vaporized feed to the further separation section. Typically, two elongated apertures are used along the width of the plate, one on each side of the centre axis.

According to a further embodiment of the first aspect, the front surface flow guiding elements being located between the one or more elongated apertures and the respective longitudinal edge.

In this way the front surface flow guiding elements may be positioned on the same vertical level as the apertures and the space in between the evaporation section and the separation section can be minimized.

According to a further embodiment of the first aspect, the ridge is located at a part of a rim of the one or more elongated apertures.

Having the ridge forming part of the edge/rim of the aperture allows the aperture to be wider, allowing the distance between the evaporation section and the separation section to be minimized. In this way the top of the ridge, i.e. the contact surface between the opposing ridges, may coincide with the edge of the aperture.

According to a further embodiment of the first aspect, the elongated ridges are spaced apart from the one or more elongated apertures.

Alternatively, having the ridge spaced apart from the one or more elongated apertures, may allow the contact surface to be wider and the structural stability of the heat exchanger adjacent the aperture may be improved. In this way the edge of the aperture may be located where the opposing plates do not contact each other. It may e.g. coincide with an imaginary central plane of the plate.

According to a further embodiment of the first aspect, the heat exchanger plate comprising a further first and second brine section on the rear surface of the plate opposite the brine sections on the front surface, the heat exchanger plate further comprising a pair of rear surface flow guiding elements for directing the vaporized feed towards the central axis and/or for directing the non-vaporized feed towards the further brine sections, each rear surface flow guiding element defining an elongated valley in the plate on the front surface between the evaporation section, the separation section and the respective brine section and extending in an oblique angle relative to the longitudinal direction.

The rear surface flow guiding elements are used for directing the flow of vaporized feed which flows through the aperture to the separation section located on the rear plate surface in the second plate interspace. The rear surface flow guiding elements fulfil the same purposes as the front surface flow guiding elements. Each of the rear surface flow guiding elements defines a ridge on the rear surface but a valley on the front surface. The rear surface flow guiding elements and the front surface flow guiding elements must thus be spaced apart. The further first and second brine section on the rear side of the plate are typically located directly opposite the pair of brine sections on the front side of the plate, as the passages may be established on both sides of the plate, similar as the separation sections. The rear surface flow guiding elements may have an identical shape as the front surface flow guiding elements.

According to a further embodiment of the first aspect, each of the front surface flow guiding elements are located adjacent the respective rear surface flow guiding element.

Preferably, the rear surface flow guiding elements are located between the longitudinal edges and the aperture.

According to a further embodiment of the first aspect, each of the front surface flow guiding elements are located between the respective rear surface flow guiding element and the elongated aperture.

The vaporized feed in the first plate interspaces comes directly from the evaporation section, located below in the same interspace. Therefore, it is more crucial to place the flow guiding elements lower and closer to the evaporation section in the first plate interspace. In the second plate interspace, the vaporized feed will first have to enter the aperture. Thus, a somewhat higher placement of the surface flow guiding elements will suffice.

According to a further embodiment of the first aspect, the pair of front surface flow guiding elements are positioned symmetrically about the centre axis.

In this way, when the plate package is made by stacking the plates successively and each second plate is rotated 180 degrees about the centre axis, the ridges of the front surface flow guiding elements of opposing plates will contact each other and form an elongated contact surface.

According to a further embodiment of the first aspect, the pair of rear surface flow guiding elements are positioned symmetrically about the centre axis.

The rear surface flow guiding elements may be symmetrical about the centre axis for the same reasons as the front surface flow guiding elements.

The above objects are realised in a second aspect, according to the invention, by a heat exchanger for treatment of a liquid feed, the heat exchanger comprising a plate package comprising a plurality heat exchanger plates, each of the heat exchanger plates defines a front surface and an opposite rear surface, a first longitudinal edge extending in a longitudinal direction and an opposite second longitudinal edge extending parallel to the first longitudinal edge and a centre axis extending substantially centrally between and in parallel with the first longitudinal edge and the second longitudinal edge, the heat exchanger plate further defining an evaporation section on the front surface for vaporizing the liquid feed, a separation section on the front surface for separating vaporized feed and non-vaporized feed, a first and a second brine section on the front surface for receiving the non-vaporized feed and a condensation section for condensing the vaporized feed, the separation sections being located between the evaporation section and the condensation section in the longitudinal direction, the first brine section being located between the evaporation section and the first longitudinal edge and the second brine section being located between the evaporation section and the second longitudinal edge, characterized in that each plate comprising a pair of front surface flow guiding elements for directing the vaporized feed towards the central axis and/or for directing the non-vaporized feed towards the respective brine section, each front surface flow guiding element defining an elongated ridge in the plate on the front surface between the evaporation section, the separation section and the respective brine section and extending in an oblique angle relative to the longitudinal direction, whereby the heat exchanging plates being successively arranged front surface to front surface and rear surface to rear surface such that the elongated ridges of opposing plates contact each other along elongated contact surfaces.

The plates according to the first aspect is preferably used in the heat exchanger according to the second aspect.

According to a further embodiment of the second aspect, the evaporation section comprises obliquely extending ridges and valleys arranged such that ridges of successive plates contact each other at contact points. In this way a good heat transfer may be achieved between the plate interspaces.

According to a further embodiment of the second aspect, the separation section comprises transversally extending ridges and valleys arranged such that ridges of successive plates fall into each other. In this way a good separation of droplets and vapor may be achieved.

The above objects are realised in a third aspect by a method of producing a plate heat exchanger for treatment of a liquid feed, the method comprising:
providing a plurality of heat exchanger plates, each heat exchanger plate defines a front surface and an opposite rear surface, a first longitudinal edge extending in a longitudinal direction and an opposite second longitudinal edge extending parallel to the first longitudinal edge and a centre axis extending substantially centrally between and in parallel with the first longitudinal edge and the second longitudinal edge, the heat exchanger plate further defining an evaporation section on the front surface for vaporizing the liquid feed, a separation section on the front surface for separating vaporized feed and non-vaporized feed, a first and a second brine section on the front surface for receiving the non-vaporized feed and a condensation section for condensing the vaporized feed, the separation sections being located between the evaporation section and the condensation section in the longitudinal direction, the first brine section being located between the evaporation section and the first longitudinal edge and the second brine section being located between the evaporation section and the second longitudinal edge, characterized in that each plate comprising a pair of front surface flow guiding elements for directing the vaporized feed towards the central axis and/or for directing the non-vaporized feed towards the respective brine section, each front surface flow guiding element defining an elongated ridge in the plate on the front surface between the evaporation section, the separation section and the respective brine section and extending in an oblique angle relative to the longitudinal direction, and
forming a plate package by arranging the plurality of heat exchange plates successively front surface to front surface and rear surface to rear surface such that the elongated ridges of opposing plates contact each other along elongated contact surfaces.

The plates according to the first aspect and the heat exchanger according to the second aspect is preferably used in the method according to the third aspect.

### Brief description of the drawings

Fig. 1 discloses a side view of a plate heat exchanger according to the present invention.
Fig. 2 discloses a front view of a prior art heat exchanging plate.
Fig. 3 discloses a flow guiding element made of rubber gasket material.
Fig. 4 discloses a front view of a plate having guiding elements according to a first embodiment.
Fig. 5 discloses a front view of a plate having guiding elements according to a second embodiment.
Fig. 6 discloses a perspective view of a heat exchanger with plates having a guiding element according to the first embodiment.
Fig. 7 discloses a perspective view of a heat exchanger with plates having a guiding element according to the second embodiment.

### Detailed description of the drawings

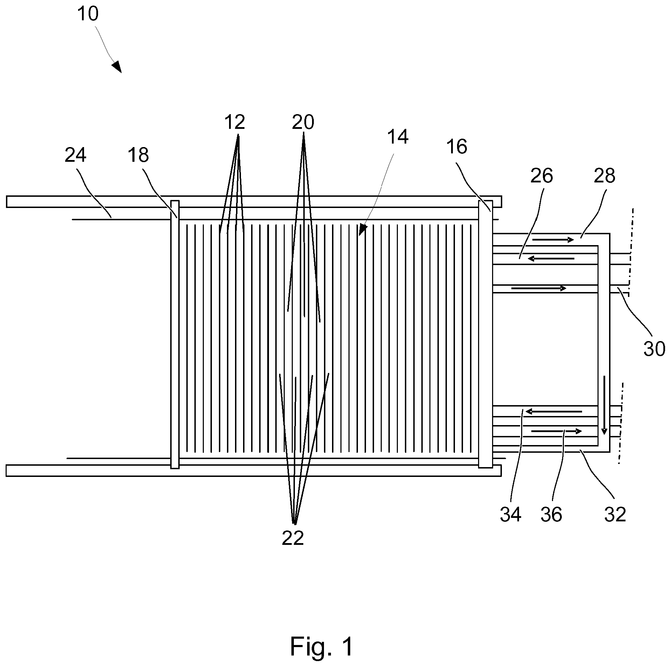

Fig. 1 discloses a side view of a plate heat exchanger 10 of the invention. In the following description an application with respect to desalination of seawater is described, i.e. the feed is sea water. However, it is to be noted that the invention is not limited to the feed being sea water but may also refer to any other treatment, for instance distillation of a liquid. The plate heat exchanger comprises a large number of compression moulded heat exchanger plates 12, which are provided in parallel to each other and successively in such a way that they form a plate package 14. The plate package 14 is provided between a frame plate 16 and a pressure plate 18.

Between the heat exchanger plates 12, first plate interspaces 20 and second plate interspaces 22 are formed. The first plate interspaces 20 and the second plate interspaces 22 are provided in an alternating order in the plate package 14 in such a way that substantially each first plate interspace 20 is neighbouring two second plate interspaces 22, and substantially each second plate interspace 22 is neighbouring two first plate interspaces 20. Different sections in the plate package 14 are delimited from each other by means of gaskets (not shown) in each plate interspace whereby the first plate interspace 20 includes a first type gasket (not shown) and the second plate interspace 22 includes a second type gasket (not shown). The plate package 14, i.e. the heat exchanger plates 12 and the gaskets (not shown) provided therebetween, is kept together by means of schematically indicated tightening bolts 24 in a manner known per se.

The plate package 14 is connected to a cooling water inlet conduit 26, a cooling water outlet conduit 28 and a fresh water outlet conduit 30. The cooling water is typically sea water and thus the cooling water outlet conduit 28 is connected to a sea water inlet conduit 32 in order to recover the heat absorbed by the cooling water. The plate package 12 is further connected to a heating fluid inlet conduit 34 and a heating fluid outlet conduit 36. The heating fluid is used for vaporizing the feed, i.e. the sea water which is entering the plate package 14 through the sea water inlet conduit 32. The heating fluid may be heated water, such as jacket water from a ship's engine. The condensed fresh water is leaving the plate package 14 through the fresh water outlet conduit 30.

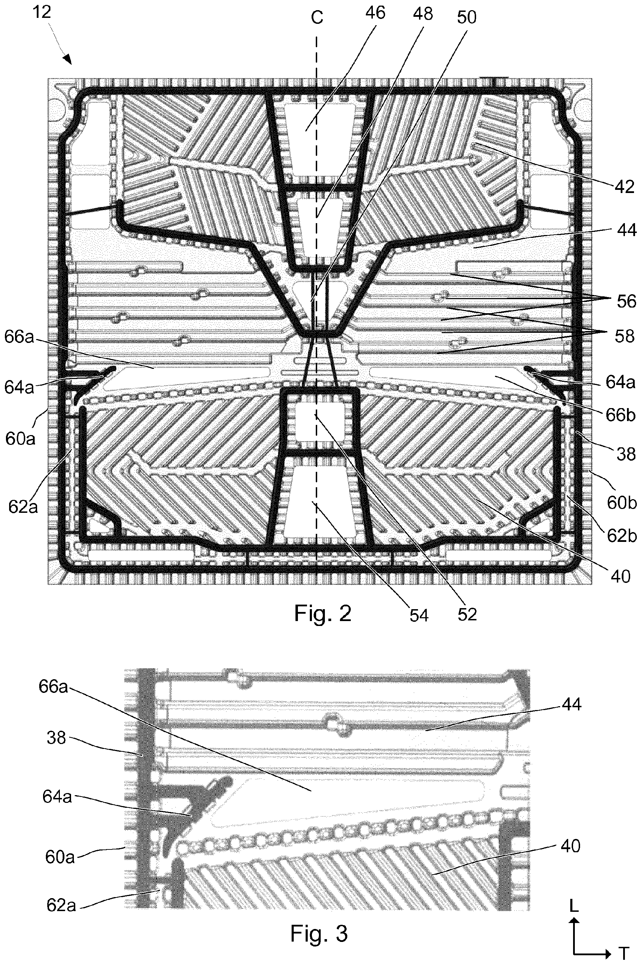

Fig. 2 discloses a front view of a prior art heat exchanging plate 12 having an evaporation section 40, a separation section 44 and a condensation section 42. The plate 12 also defines centrally located ports 46 48 50 52 54 along the centre axis C, the ports 46 48 constituting cooling fluid outlet and inlet ports, the port 50 constituting a fresh water outlet port and the ports 52 54 constituting heating fluid inlet and outlet ports. The separation section defines transversally oriented ridges 56 and valleys 58. The plate also defines a gasket 38 in a gasket groove.

Further, the plate 12 defines a first longitudinal edge 60a and an opposite second longitudinal edge 60b, both being parallel with the centre axis (C). The plate 12 also defines a first brine section 62a between the evaporation section 40 and the first longitudinal edge 60a and a second brine section 62b between the evaporation section 40 and the second longitudinal edge 60b for receiving non-vaporized feed. Also visible are two opposite flow guiding elements 64a 64b each being accommodated in a gasket groove, and the elongated apertures 66a 66b for allowing vaporized feed to flow to the opposite plate interspace.

Fig. 3 discloses a front view of a part of the above heat exchanger plate 12 having a flow guiding element 64a made of rubber gasket material. The flow guiding element 64 forms part of the gasket 38 adjacent the first longitudinal edge 60a. The flow guiding element 64a is located between the evaporation section 40, the separation section 44 and the first brine section 62a for directing the vaporized feed towards the central axis (C) and/or for directing the non-vaporized feed towards the brine section. The plate 12 also features the elongated aperture 66a for allowing vaporized feed to flow to the opposite plate interspace.

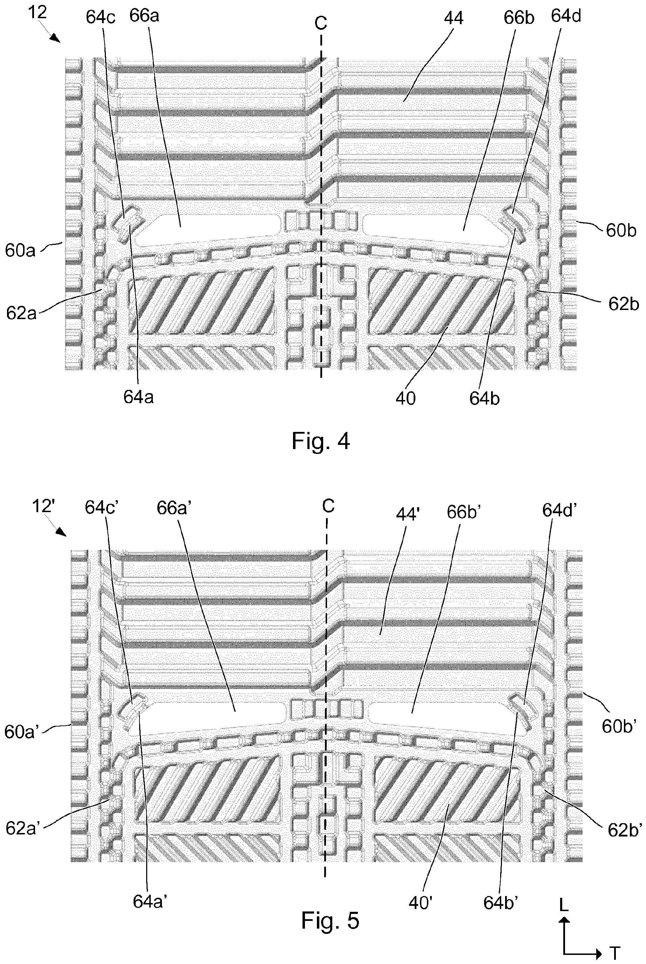

Fig. 4 discloses a front view of a plate 12 having guiding elements 64a 64b 64c 64d according to a first embodiment. The shown part of the plate 12 is the area between the evaporation section 40 and the separation section 44. Two elongated apertures 66a 66b extend between the evaporation section 40 and the separation section 44 whereby each elongated aperture 66a 66b extend on a respective side of the central axis C. The apertures 66a 66b and the guiding elements 64a 64b 64c 64d are positioned symmetrically about the centre axis C. Also, two opposite brine channels 62a 62b extend symmetrically on opposite sides of the evaporation section.

Two elongated front surface flow guiding element 64a 64b constituting ridges on the front plate surface extend between the evaporation section 40 and the separation section 44 whereby the first of the elongated front surface flow guiding elements 64a is located between the first brine section 62a and the first elongated aperture 66a whereas the second of the elongated front surface flow guiding element 64b is located between the second brine section 62b and the second elongated aperture 66b.

Two elongated rear surface flow guiding elements 64c 64d constituting valleys on the front plate surface extend between the evaporation section 40 and the separation section 44 whereby the first of the elongated rear surface flow guiding element 64c is located between the first brine section 62a and the first elongated aperture 66a whereas the second of the elongated rear surface flow guiding element 64d is located between the second brine section 62b and the second elongated aperture 66b.

In the present embodiment the elongated apertures 66a 66b and the ridge constituting the front surface flow guiding elements 64a 64b are spaced apart. The rear surface flow guiding elements 64c 64d are located closer to the separation section 44 than the front surface flow guiding elements 64a 64b.

Fig. 5 discloses a front view of a plate 12' having guiding elements according to a second embodiment. The second embodiment is identical to the first embodiment, except that the ridges constituting the front surface flow guiding elements 64a' 64b' forms part of the rim/edge of the respective elongated aperture 66a' 66b'

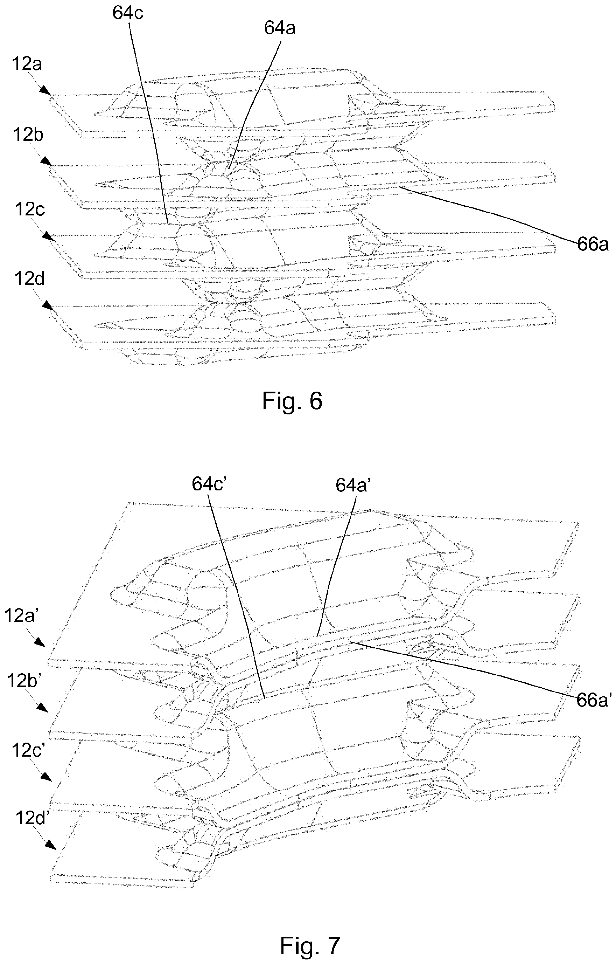

Fig. 6 discloses a perspective view of a heat exchanger with heat exchanging plates 12a 12b 12c 12d each having a front surface guiding element 64a and a rear surface guiding element 64c according to the first embodiment. Thus, the front surface guiding element 64a is located spaced apart from the elongated aperture 66a. The front surface guiding element 64a is located between the elongated aperture 66a and the rear surface guiding element 64c.

Fig. 7 discloses a perspective view of a heat exchanger with heat exchanging plates 12a' 12b' 12c' 12d' each having a front surface guiding element 64a' and a rear surface guiding element 64c' according to the second embodiment. Thus, the front surface guiding element 64a' the front surface flow guiding element forms part of the rim/edge of the elongated aperture 66a'. The front surface guiding element 64a' is located between the elongated aperture 66a' and the rear surface guiding element 64c'.

Although the above description is directed towards a desalination plant, it is evident that the present technology also can be used for other purposes than preparing fresh water by using different feeds, such as preparing concentrates, e.g. concentrated fruit juices etc.

### Reference numerals

10. plate heat exchanger
12. heat exchanger plates
14. plate package
16. frame plate
18. pressure plate
20. first plate interspaces
22. second plate interspaces
24. tightening bolts
26. cooling water inlet conduit
28. cooling water outlet conduit
30. fresh water outlet conduit
32. sea water inlet conduit
34. heating fluid inlet conduit
36. heating fluid outlet conduit
38. gasket
40. evaporation section
42. condensation section
44. separation section
46. cooling fluid outlet
48. cooling fluid inlet
50. fresh water outlet
52. heating fluid inlet
54. heating fluid outlet
56. ridge
58. valley
60. longitudinal edge
62. brine section
64. flow guiding element
66. elongated aperture
C. centre vertical axis
(`) denotes a similar features in a different embodiment.

## Claims

1. A heat exchanger plate (12) for a plate heat exchanger (10) for treatment of a liquid feed, the heat exchanger plate (12) defines a front surface and an opposite rear surface, a first longitudinal edge (60a) extending in a longitudinal direction and an opposite second longitudinal edge (60b) extending parallel to the first longitudinal edge (60a) and a centre axis (C) extending substantially centrally between and in parallel with the first longitudinal edge (60a) and the second longitudinal edge (60b), the heat exchanger plate (12) further defining an evaporation section (40) on the front surface for vaporizing the liquid feed, a separation section (44) on the front surface for separating vaporized feed and non-vaporized feed, a first and a second brine section (62b) on the front surface for receiving the non-vaporized feed and a condensation section (22) for condensing the vaporized feed, the separation sections (44) being located between the evaporation section (40) and the condensation section (22) in the longitudinal direction, the first brine section (62a) being located between the evaporation section (40) and the first longitudinal edge (60a) and the second brine section (62b) being located between the evaporation section (40) and the second longitudinal edge (60b), the evaporation section (40) comprises obliquely extending ridges and valleys and the separation section (44) comprises transversally extending ridges (56) and valleys (58),
**characterized in that** each plate comprising a pair of front surface flow guiding elements (64) for directing the vaporized feed towards the central axis and/or for directing the non-vaporized feed towards the respective brine section (62a, 62b), each front surface flow guiding element (64) defining an elongated ridge in the plate on the front surface between the evaporation section (40), the separation section (44) and the respective brine section (62a, 62b) and extending in an oblique angle relative to the longitudinal direction, wherein when the heat exchanging plate (12) being arranged successively with identical heat exchanging plates (12) front surface to front surface and rear surface to rear surface to form a plate package of a heat exchanger, the obliquely extending ridges of the evaporation section (40) contact each other at contact points, the transversally extending ridges (56) of the separation section (44) fall into each other and the elongated ridges of opposing plates (12) contact each other along elongated contact surfaces.

2. The heat exchanger plate (12) according to claim 1, wherein the heat exchanger plate (12) defines a further separation section (44) on the rear surface of the plate opposite the separation section (44) on the front surface and one or more elongated apertures (66a, 66b) located between the evaporation section (40) and the separation section (44) for allowing vaporized feed to flow through the plate (12).

3. The heat exchanger plate (12) according to claim 2, wherein the front surface flow guiding elements (64) being located between the one or more elongated apertures (66a, 66b) and the respective longitudinal edge (60a, 60b).

4. The heat exchanger plate (12) according to any of the claims 2-3, wherein the ridge is located at a part of a rim of the one or more elongated apertures (66a, 66b).

5. The heat exchanger plate (12) according to any of the claims 2-3, wherein the elongated ridges are spaced apart from the one or more elongated apertures (66a, 66b).

6. The heat exchanger plate (12) according to any of the claims 2-5, wherein the heat exchanger plate (12) comprising a further first and second brine section (62a, 62b) on the rear surface of the plate opposite the brine sections (62a, 62b) on the front surface, the heat exchanger plate (12) further comprising a pair of rear surface flow guiding elements (64) for directing the vaporized feed towards the central axis (C) and/or for directing the non-vaporized feed towards the further brine sections (62a, 62b), each rear surface flow guiding element (64) defining elongated valleys (58) in the plate on the front surface between the evaporation section (40), the separation section (44) and the respective brine section (62a, 62b) and extending in an oblique angle relative to the longitudinal direction.

7. The heat exchanger plate (12) according to claim 6, wherein each of the front surface flow guiding elements (64) are located adjacent the respective rear surface flow guiding element (64).

8. The heat exchanger plate (12) according to any of the claims 6-7, wherein each of the front surface flow guiding elements (64) are located between the respective rear surface flow guiding element (64) and the elongated aperture (66).

9. The heat exchanger plate (12) according to any of the preceding claims, wherein the pair of front surface flow guiding elements (64) are positioned symmetrically about the centre axis (C).

10. The heat exchanger plate (12) according to any of the claims 6-9, wherein the pair of rear surface flow guiding elements (64) are positioned symmetrically about the centre axis (C).

11. A heat exchanger for treatment of a liquid feed, the heat exchanger comprising a plate package comprising a plurality heat exchanger plates (12) according to any of the preceding claims, wherein the heat exchanging plates (12) are successively arranged front surface to front surface and rear surface to rear surface such that the elongated ridges of opposing plates (12) contact each other along elongated contact surfaces.

12. A method of producing a plate heat exchanger (10) for treatment of a liquid feed, the method comprising:
providing a plurality of heat exchanger plates, each heat exchanger plate (12) defines a front surface and an opposite rear surface, a first longitudinal edge (60a) extending in a longitudinal direction and an opposite second longitudinal edge (60b) extending parallel to the first longitudinal edge (60a) and a centre axis (C) extending substantially centrally between and in parallel with the first longitudinal edge (60a) and the second longitudinal edge (60b), the heat exchanger plate (12) further defining an evaporation section (40) on the front surface for vaporizing the liquid feed, a separation section (44) on the front surface for separating vaporized feed and non-vaporized feed, a first and a second brine section (62b) on the front surface for receiving the non-vaporized feed and a condensation section (22) for condensing the vaporized feed, the separation sections (44) being located between the evaporation section (40) and the condensation section (22) in the longitudinal direction, the first brine section (62a) being located between the evaporation section (40) and the first longitudinal edge (60a) and the second brine section (62b) being located between the evaporation section (40) and the second longitudinal edge (60b), wherein the evaporation section (40) comprises obliquely extending ridges and valleys (58) arranged such that ridges of successive plates (12) contact each other at contact points and wherein the separation section (44) comprises transversally extending ridges (56) and valleys (58) arranged such that ridges (56) of successive plates (12) fall into each other, **characterized in that** each plate comprising a pair of front surface flow guiding elements (64) for directing the vaporized feed towards the central axis and/or for directing the non-vaporized feed towards the respective brine section (62a, 62b), each front surface flow guiding element (64) defining an elongated ridge in the plate on the front surface between the evaporation section (40), the separation section (44) and the respective brine section (62a, 62b) and extending in an oblique angle relative to the longitudinal direction, and
forming a plate package by arranging the plurality of heat exchange plates (12) successively front surface to front surface and rear surface to rear surface such that the elongated ridges of opposing plates (12) contact each other along elongated contact surfaces.

## Patentansprüche

1. Wärmetauscherplatte (12) für einen Plattenwärmetauscher (10) zur Behandlung einer Flüssigkeitsspeisung, wobei die Wärmetauscherplatte (12) eine vordere Fläche und eine entgegengesetzte hintere Fläche, eine erste Längskante (60a), die sich in einer Längsrichtung erstreckt, und eine gegenüberliegende zweite Längskante (60b), die sich parallel zu der ersten Längskante (60a) erstreckt, und eine Mittelachse (C), die sich im Wesentlichen mittig zwischen der ersten Längskante (60a) und der zweiten Längskante (60b) und parallel zu denselben erstreckt, definiert, wobei die Wärmetauscherplatte (12) ferner eine Verdampfungssektion (40) an der vorderen Fläche zum Verdampfen der Flüssigkeitsspeisung, eine Abscheidungssektion (44) an der vorderen Fläche zum Abscheiden verdampfter Speisung und unverdampfter Speisung, eine erste und eine zweite Solesektion (62b) an der vorderen Fläche zum Aufnehmen der unverdampften Speisung und eine Kondensationssektion (22) zum Kondensieren der verdampften Speisung definiert, wobei die Abscheidungssektionen (44) zwischen der Verdampfungssektion (40) und der Kondensationssektion (22) in der Längsrichtung angeordnet sind, wobei die erste Solesektion (62b) zwischen der Verdampfungssektion (40) und der ersten Längskante (60a) angeordnet ist und die zweite Solesektion (62b) zwischen der Verdampfungssektion (40) und der zweiten Längskante (60b) angeordnet ist, wobei die Verdampfungssektion (40) sich schräg erstreckende Rippen und Furchen umfasst und die Abscheidungssektion (44) sich quer erstreckende Rippen (56) und Furchen (58) umfasst,
**dadurch gekennzeichnet, dass** jede Platte ein Paar von Vorderfläche-Strömungsleitelementen (64) zum Leiten der verdampften Speisung hin zu der Mittelachse und/oder zum Leiten der unverdampften Speisung hin zu der jeweiligen Solesektion (62a, 62b) umfasst, wobei jedes Vorderfläche-Strömungsleitelement (64) eine längliche Rippe in der Platte an der vorderen Fläche zwischen der Verdampfungssektion (40), der Abscheidungssektion (44) und der jeweiligen Solesektion (62a, 62b) definiert und sich in einem schrägen Winkel im Verhältnis zu der Längsrichtung erstreckt, wobei, wenn die Wärmetauscherplatte (12) aufeinanderfolgend mit identischen Wärmetauscherplatten (12) vordere Fläche an vorderer Fläche und hintere Fläche an hinterer Fläche angeordnet ist, um ein Plattenpaket eines Wärmetauschers zu bilden, die sich schräg erstreckenden Rippen der Verdampfungssektion (40) einander an Berührungspunkten berühren, die sich quer erstreckenden Rippen (56) der Abscheidungssektion (44) ineinander fallen und die länglichen Rippen gegenüberliegender Platten (12) einander entlang länglicher Berührungsflächen berühren.

2. Wärmetauscherplatte (12) nach Anspruch 1, wobei die Wärmetauscherplatte (12) eine weitere Abscheidungssektion (44) an der hinteren Fläche der Platte entgegengesetzt zu der Abscheidungssektion (44) an der vorderen Fläche und eine oder mehrere längliche Öffnungen (66a, 66b), die zwischen der Verdampfungssektion (40) und der Abscheidungssektion (44) angeordnet sind, definiert, um zu ermöglichen, dass verdampfte Speisung durch die Platte (12) strömt.

3. Wärmetauscherplatte (12) nach Anspruch 2, wobei die Vorderfläche-Strömungsleitelemente (64) zwischen der einen oder den mehreren länglichen Öffnungen (66a, 66b) und der jeweiligen Längskante (60a, 60b) angeordnet sind.

4. Wärmetauscherplatte (12) nach einem der Ansprüche 2 bis 3, wobei die Rippe an einem Teil eines Randes der einen oder den mehreren länglichen Öffnungen (66a, 66b) angeordnet ist.

5. Wärmetauscherplatte (12) nach einem der Ansprüche 2 bis 3, wobei die länglichen Rippen von der einen oder den mehreren länglichen Öffnungen (66a, 66b) beabstandet sind.

6. Wärmetauscherplatte (12) nach einem der Ansprüche 2 bis 5, wobei die Wärmetauscherplatte (12) eine weitere erste und zweite Solesektion (62a, 62b) an der hinteren Fläche der Platte entgegengesetzt zu den Solesektionen (62a, 62b) an der vorderen Fläche umfasst, wobei die Wärmetauscherplatte (12) ferner ein Paar von Hinterfläche-Strömungsleitelementen (64) zum Leiten der verdampften Speisung hin zu der Mittelachse (C) und/oder zum Leiten der unverdampften Speisung hin zu den weiteren Solesektionen (62a, 62b) umfasst, wobei jedes Hinterfläche-Strömungsleitelement (64) längliche Furchen (58) in der Platte an der vorderen Fläche zwischen der Verdampfungssektion (40), der Abscheidungssektion (44) und der jeweiligen Solesektion (62a, 62b) definiert und sich in einem schrägen Winkel im Verhältnis zu der Längsrichtung erstreckt.

7. Wärmetauscherplatte (12) nach Anspruch 6, wobei jedes von den Vorderfläche-Strömungsleitelementen (64) angrenzend an das jeweilige Hinterfläche-Strömungsleitelement (64) angeordnet ist.

8. Wärmetauscherplatte (12) nach einem der Ansprüche 6 bis 7, wobei jedes von den Vorderfläche-Strömungsleitelementen (64) zwischen dem jeweiligen Hinterfläche-Strömungsleitelement (64) und der länglichen Öffnung (66) angeordnet ist.

9. Wärmetauscherplatte (12) nach einem der vorhergehenden Ansprüche, wobei das Paar von Vorderfläche-Strömungsleitelementen (64) symmetrisch um die Mittelachse (C) angeordnet ist.

10. Wärmetauscherplatte (12) nach einem der Ansprüche 6 bis 9, wobei das Paar von Hinterfläche-Strömungsleitelementen (64) symmetrisch um die Mittelachse (C) angeordnet ist.

11. Wärmetauscher zur Behandlung einer Flüssigkeitsspeisung, wobei der Wärmetauscher ein Plattenpaket umfasst, das eine Vielzahl von Wärmetauscherplatten (12) nach einem der vorhergehenden Ansprüche umfasst, wobei die Wärmetauschplatten (12) derart aufeinanderfolgend vordere Fläche an vorderer Fläche und hintere Fläche an hinterer Fläche angeordnet sind, dass die länglichen Rippen gegenüberliegender Platten (12) einander entlang länglicher Berührungsflächen berühren.

12. Verfahren zum Herstellen eines Plattenwärmetauschers (10) zur Behandlung einer Flüssigkeitsspeisung, wobei das Verfahren Folgendes umfasst:
Bereitstellen einer Vielzahl von Wärmetauscherplatten, wobei jede Wärmetauscherplatte (12) eine vordere Fläche und eine entgegengesetzte hintere Fläche, eine erste Längskante (60a), die sich in einer Längsrichtung erstreckt, und eine gegenüberliegende zweite Längskante (60b), die sich parallel zu der ersten Längskante (60a) erstreckt, und eine Mittelachse (C), die sich im Wesentlichen mittig zwischen der ersten Längskante (60a) und der zweiten Längskante (60b) und parallel zu denselben erstreckt, definiert, wobei die Wärmetauscherplatte (12) ferner eine Verdampfungssektion (40) an der vorderen Fläche zum Verdampfen der Flüssigkeitsspeisung, eine Abscheidungssektion (44) an der vorderen Fläche zum Abscheiden verdampfter Speisung und unverdampfter Speisung, eine erste und eine zweite Solesektion (62b) an der vorderen Fläche zum Aufnehmen der unverdampften Speisung und eine Kondensationssektion (22) zum Kondensieren der verdampften Speisung definiert, wobei die Abscheidungssektionen (44) zwischen der Verdampfungssektion (40) und der Kondensationssektion (22) in der Längsrichtung angeordnet sind, wobei die erste Solesektion (62b) zwischen der Verdampfungssektion (40) und der ersten Längskante (60a) angeordnet ist und die zweite Solesektion (62b) zwischen der Verdampfungssektion (40) und der zweiten Längskante (60b) angeordnet ist, wobei die Verdampfungssektion (40) sich schräg erstreckende Rippen und Furchen (58) umfasst, die derart angeordnet sind, dass Rippen aufeinanderfolgender Platten (12) einander an Berührungspunkten berühren, und wobei die Abscheidungssektion (44) sich quer erstreckende Rippen (56) und Furchen (58) umfasst, die derart angeordnet sind, dass Rippen (56) aufeinanderfolgender Platten (12) ineinander fallen, **dadurch gekennzeichnet, dass** jede Platte ein Paar von Vorderfläche-Strömungsleitelementen (64) zum Leiten der verdampften Speisung hin zu der Mittelachse und/oder zum Leiten der unverdampften Speisung hin zu der jeweiligen Solesektion (62a, 62b) umfasst, wobei jedes Vorderfläche-Strömungsleitelement (64) eine längliche Rippe in der Platte an der vorderen Fläche zwischen der Verdampfungssektion (40), der Abscheidungssektion (44) und der jeweiligen Solesektion (62a, 62b) definiert und sich in einem schrägen Winkel im Verhältnis zu der Längsrichtung erstreckt, und
Formen eines Plattenpakets durch Anordnen der Vielzahl von Wärmetauscherplatten (12) aufeinanderfolgend vordere Fläche an vorderer Fläche und hintere Fläche an hinterer Fläche derart, dass die länglichen Rippen gegenüberliegender Platten (12) einander entlang länglicher Berührungsflächen berühren.

## Revendications

1. Plaque d'échangeur de chaleur (12) pour un échangeur de chaleur à plaques (10) pour le traitement d'une alimentation en liquide, la plaque d'échangeur de chaleur (12) définissant une surface avant et une surface arrière opposée, un premier bord longitudinal (60a) s'étendant dans une direction longitudinale et un second bord longitudinal (60b) opposé s'étendant parallèlement au premier bord longitudinal (60a) et un axe central (C) s'étendant sensiblement centralement entre le premier bord longitudinal (60a) et le second bord longitudinal (60b) et parallèlement à ceux-ci, la plaque d'échangeur de chaleur (12) définissant en outre une section d'évaporation (40) sur la surface avant pour vaporiser l'alimentation en liquide, une section de séparation (44) sur la surface avant pour séparer de l'alimentation vaporisée et de l'alimentation non vaporisée, une première et une seconde section de saumure (62b) sur la surface avant pour recevoir l'alimentation non vaporisée et une section de condensation (22) pour condenser l'alimentation vaporisée, les sections de séparation (44) étant situées entre la section d'évaporation (40) et la section de condensation (22) dans la direction longitudinale, la première section de saumure (62a) étant située entre la section d'évaporation (40) et le premier bord longitudinal (60a) et la seconde section de saumure (62b) étant située entre la section d'évaporation (40) et le second bord longitudinal (60b), la section d'évaporation (40) comprend des crêtes et des vallées s'étendant obliquement et la section de séparation (44) comprend des crêtes (56) et des vallées (58) s'étendant transversalement,
**caractérisé en ce que** chaque plaque comprend une paire d'éléments de guidage d'écoulement de surface avant (64) pour diriger l'alimentation vaporisée vers l'axe central et/ou pour diriger l'alimentation non vaporisée vers la section de saumure (62a, 62b) respective, chaque élément de guidage d'écoulement de surface avant (64) définissant une crête allongée dans la plaque sur la surface avant entre la section d'évaporation (40), la section de séparation (44) et la section de saumure (62a, 62b) respective et s'étendant selon un angle oblique par rapport à la direction longitudinale, dans lequel, lorsque la plaque d'échange de chaleur (12) est disposée successivement avec des plaques d'échange de chaleur (12) identiques, surface avant à surface avant et surface arrière à surface arrière, pour former un ensemble de plaques d'un échangeur de chaleur, les crêtes s'étendant obliquement de la section d'évaporation (40) sont en contact les unes avec les autres au niveau des points de contact, les crêtes (56) s'étendant transversalement de la section de séparation (44) tombent les unes dans les autres et les crêtes allongées de plaques (12) opposées sont en contact les unes avec les autres le long de surfaces de contact allongées.

2. Plaque d'échangeur de chaleur (12) selon la revendication 1, dans laquelle la plaque d'échangeur de chaleur (12) définit une section de séparation (44) supplémentaire sur la surface arrière de la plaque opposée à la section de séparation (44) sur la surface avant et une ou plusieurs ouvertures allongées (66a, 66b) situées entre la section d'évaporation (40) et la section de séparation (44) pour permettre à l'alimentation vaporisée de s'écouler à travers la plaque (12).

3. Plaque d'échangeur de chaleur (12) selon la revendication 2, dans laquelle les éléments de guidage d'écoulement de surface avant (64) sont situés entre la ou les ouvertures allongées (66a, 66b) et le bord longitudinal respectif (60a, 60b).

4. Plaque d'échangeur de chaleur (12) selon l'une quelconque des revendications 2 à 3, dans laquelle la crête est située au niveau d'une partie d'un bord des une ou plusieurs ouvertures allongées (66a, 66b).

5. Plaque d'échangeur de chaleur (12) selon l'une quelconque des revendications 2 à 3, dans laquelle les crêtes allongées sont espacées des une ou plusieurs ouvertures allongées (66a, 66b).

6. Plaque d'échangeur de chaleur (12) selon l'une quelconque des revendications 2 à 5, dans laquelle la plaque d'échangeur de chaleur (12) comprend une première et une seconde section de saumure (62a, 62b) supplémentaires sur la surface arrière de la plaque opposée aux sections de saumure (62a, 62b) sur la surface avant, la plaque d'échangeur de chaleur (12) comprenant en outre une paire d'éléments de guidage d'écoulement de surface arrière (64) pour diriger l'alimentation vaporisée vers l'axe central (C) et/ou pour diriger l'alimentation non vaporisée vers les sections de saumure (62a, 62b) supplémentaires, chaque élément de guidage d'écoulement de surface arrière (64) définissant des vallées (58) allongées dans la plaque sur la surface avant entre la section d'évaporation (40), la section de séparation (44) et la section de saumure (62a, 62b) respective et s'étendant dans un angle oblique par rapport à la direction longitudinale.

7. Plaque d'échangeur de chaleur (12) selon la revendication 6, dans laquelle chacun des éléments de guidage d'écoulement de surface avant (64) est situé de manière adjacente à l'élément de guidage d'écoulement de surface arrière (64) respectif.

8. Plaque d'échangeur de chaleur (12) selon l'une quelconque des revendications 6 à 7, dans laquelle chacun des éléments de guidage d'écoulement de surface avant (64) est situé entre l'élément de guidage d'écoulement de surface arrière (64) respectif et l'ouverture allongée (66).

9. Plaque d'échangeur de chaleur (12) selon l'une quelconque des revendications précédentes, dans laquelle la paire d'éléments de guidage d'écoulement de surface avant (64) est positionnée de manière symétrique autour de l'axe central (C).

10. Plaque d'échangeur de chaleur (12) selon l'une quelconque des revendications 6 à 9, dans laquelle la paire d'éléments de guidage d'écoulement de surface arrière (64) est positionnée de manière symétrique autour de l'axe central (C).

11. Échangeur de chaleur pour le traitement d'une alimentation en liquide, l'échangeur de chaleur comprenant un ensemble de plaques comprenant une pluralité de plaques d'échangeur de chaleur (12) selon l'une quelconque des revendications précédentes, dans lequel les plaques d'échange de chaleur (12) sont successivement disposées surface avant à surface avant et surface arrière à surface arrière de sorte que les crêtes allongées de plaques (12) opposées soient en contact les unes avec les autres le long de surfaces de contact allongées.

12. Procédé de fabrication d'un échangeur de chaleur à plaques (10) pour le traitement d'une alimentation en liquide, le procédé comprenant :
la fourniture d'une pluralité de plaques d'échangeur de chaleur, chaque plaque d'échangeur de chaleur (12) définissant une surface avant et une surface arrière opposée, un premier bord longitudinal (60a) s'étendant dans une direction longitudinale et un second bord longitudinal (60b) opposé s'étendant parallèlement au premier bord longitudinal (60a) et un axe central (C) s'étendant sensiblement centralement entre le premier bord longitudinal (60a) et le second bord longitudinal (60b) et parallèlement à ceux-ci, la plaque d'échangeur de chaleur (12) définissant en outre une section d'évaporation (40) sur la surface avant pour vaporiser l'alimentation en liquide, une section de séparation (44) sur la surface avant pour séparer l'alimentation vaporisée et l'alimentation non vaporisée, une première et une seconde section de saumure (62b) sur la surface avant pour recevoir l'alimentation non vaporisée et une section de condensation (22) pour condenser l'alimentation vaporisée, les sections de séparation (44) étant situées entre la section d'évaporation (40) et la section de condensation (22) dans la direction longitudinale, la première section de saumure (62a) étant située entre la section d'évaporation (40) et le premier bord longitudinal (60a) et la seconde section de saumure (62b) étant située entre la section d'évaporation (40) et le second bord longitudinal (60b), dans lequel la section d'évaporation (40) comprend des crêtes et des vallées (58) s'étendant obliquement, agencées de telle sorte que des crêtes de plaques (12) successives entrent en contact les unes avec les autres au niveau de points de contact et dans lequel la section de séparation (44) comprend des crêtes (56) et des vallées (58) s'étendant transversalement, agencées de telle sorte que des crêtes (56) de plaques successives (12) tombent les unes dans les autres, **caractérisé en ce que** chaque plaque comprend une paire d'éléments de guidage d'écoulement de surface avant (64) pour diriger l'alimentation vaporisée vers l'axe central et/ou pour diriger l'alimentation non vaporisée vers la section de saumure (62a, 62b) respective, chaque élément de guidage d'écoulement de surface avant (64) définissant une crête allongée dans la plaque sur la surface avant entre la section d'évaporation (40), la section de séparation (44) et la section de saumure (62a, 62b) respective et s'étendant selon un angle oblique par rapport à la direction longitudinale, et
la formation d'un ensemble de plaques en agençant la pluralité de plaques d'échange de chaleur (12) successivement, surface avant à surface avant et surface arrière à surface arrière, de sorte que les crêtes allongées de plaques (12) opposées soient en contact les unes avec les autres le long de surfaces de contact allongées.
